## Europäisches Patentamt
## European Patent Office
## Office européen des brevets

(11) Numéro de publication: **0 089 279**
**B1**

(12) **FASCICULE DE BREVET EUROPÉEN**

(45) Date de publication du fascicule du brevet:
02.07.86

(51) Int. Cl.⁴: **C 09 D 3/82**, C 08 G 77/18

(21) Numéro de dépôt: 83400490.5

(22) Date de dépôt: 10.03.83

(54) Composition liquide de base convenant pour la réalisation de revêtements transparents sur des surfaces solides, procédé d'application et revêtements obtenus.

(30) Priorité: 16.03.82 FR 8204409

(43) Date de publication de la demande:
21.09.83 Bulletin 83/38

(45) Mention de la délivrance du brevet:
02.07.86 Bulletin 86/27

(84) Etats contractants désignés:
AT BE CH DE FR GB IT LI LU NL SE

(56) Documents cité:
FR-A-2 423 521
GB-A-2 068 010
US-A-3 642 693
US-A-3 790 527

PATENTS ABSTRACTS OF JAPAN, vol. 3, no. 138(C-64), 16 novembre 1979, page 59C64

Le dossier contient des informations techniques présentées postérieurement au dépôt de la demande et ne figurant pas dans le présent fascicule.

(73) Titulaire: **INSTITUT NATIONAL DE RECHERCHE CHIMIQUE APPLIQUEE, 18 Bis, Boulevard de la Bastille, F-75012 Paris (FR)**

(72) Inventeur: **Lampin, Jean-Pierre, 5 Avenue des Azalées, F-77310 Ponthierry (FR)**
Inventeur: **Leclaire, Yves, 6 Rue de la Libération, F-77250 Veneux les Sablons (FR)**

(74) Mandataire: **Rinuy, Santarelli, 14, avenue de la Grande Armée, F-75017 Paris (FR)**

## Description

La présente invention concerne une composition liquide de base convenant pour la réalisation de revêtements transparents ou vernis sur des surfaces solides. Elle concerne aussi le procédé d'obtention de ces vernis et les vernis en résultant.

On sait que les surfaces solides ayant subi des traitements ou des usinages parfois très poussés, pour leur conférer un poli, un brillant ou tout autre aspect dicté par des nécessités ou des besoins d'ordre technique ou simplement décoratif, doivent être protégées par des revêtements appropriés pour leur éviter les risques d'altération de leur état. Une telle protection s'impose d'autant plus que la surface considérée est fragile ou particulièrement sujette, de par sa nature elle-même, à ces risques d'altération ou de dégradation comme c'est le cas, par exemple, pour le verre ou les succédanés du verre qui se rayent ou s'opacifient par suite de phénomènes de frottement, d'abrasion, voire même à la suite de chocs. Ce risque de rayage se rencontre du reste aussi dans le cas d'autres produits tels que matériaux plastiques, céramiques, porcelaines, faïences, grès, métaux usinés ou polis, etc.

On a déjà proposé un certain nombre de revêtements pour éviter ou s'opposer à de telles dégradations de surfaces. Toutefois, ces revêtements présentent généralement, et entre autres, au moins l'un des inconvénients suivants:. adhérence insuffisante au support; résistance au rayage et/ou à l'abrasion insuffisamment élevée; perte de transparence avec le temps; perte de la dureté dans le temps; médiocre résistance au craquèlement; perte d'efficacité protectrice sous l'action de l'eau ou d'atmosphères humides.

Par ailleurs, les solutions à partir desquelles sont réalisés ces revêtements n'ont pas une stabilité suffisante dans le temps pour permettre un stockage prolongé.

Leur dégradation dans le temps est en effet au détriment des propriétés physiques des revêtements à réaliser.

Or, la présente invention vise, d'une part, une composition de base convenant pour la réalisation de revêtements ou de vernis transparents et qui soit stable dans le temps pour permettre son stockage sans risques de dégradation et, d'autre part, des vernis ne présentant pas les inconvénients ci-dessus mais ayant au contraire l'ensemble des principales propriétés suivantes, à savoir: une bonne addhérence au support, une bonne résistance au rayage et/ou à l'abrasion, une bonne dureté, une bonne résistance à l'opacification dans le temps, une bonne résistance au craquèlement, une bonne résistance à l'eau, aux atmosphères humides, et une épaisseur suffisante du vernis durci.

De façon particulière, l'invention vise une composition de base pour vernis du type comprenant un hydrolysat d'organisiloxanes. Ce type de composition est en effet l'un de ceux préconisés dans la technique antérieure (FR 2.423.521).

A ce sujet, le Demandeur a toutefois constaté que non seulement la nature des composés soumis à l'hydrolyse avait de l'importance mais que les conditions mêmes de cette hydrolyse étaient d'une extrême importance et que, suivant les conditions choisies, les revêtements réalisés à partir des solutions en résultant pouvaient avoir des propriétés physiques et des comportements différents mais qu'en général ces revêtements présentaient, l'un ou l'autre, ou plusieurs des inconvénients rappelés ci-dessus. C'est ainsi que si l'on fait varier la nature des constituants cu les conditions d'hydrolyse pour tenter d'améliorer la résistance à l'abrasion du revêtement réalisé, ce dernier se craquèle facilement et que, si l'on améliore sa résistance au craquèlement, sa résistance à l'abrasion diminue. En outre, comme indiqué précédemment, les solutions d'hydrolysat obtenues se conservent trop peu de temps pour pouvoir être utiles pendant une durée acceptable pour une utilisation industrielle. Enfin, les revêtements résultant de ces solutions d'hydrolysat montrent, au test à l'eau bouillante, soit une perte d'adhésion, soit une perte de dureté, soit une opalescence et des défauts incompatibles avec le maintien de l'aspect de l'objet à protéger ou de ses qualités optiques, en transmission ou en réflexion.

Par ailleurs, la durée de durcissement de tels vernis est relativement longue. Or l'invention vise aussi à réduire cette durée de duicissement tout en ayant une adhérence acceptable.

Ainsi, le Demandeur fournit une composition de base obviant aux inconvénients ci-dessus et permettant de réaliser directement sur des surfaces solides, sans recourir à une couche dite de fond, un vernis adhérent, dur et résistant aux chocs même après traitement à l'eau bouillante, cette composition présentant, par ailleurs, une longue durée de conservation, même à température ambiante.

La composition de base stable selon l'invention comprend, en solution, dans au moins un solvant organique pouvant ou non contenir de l'eau, de 10 à 40 % en poids d'un composé organosilicique durcissable correspondant à celui résultant d'une première réaction d'hydrolyse effectuée à une température inférieure à 50°C en présence d'un acide carboxylique et d'eau sur au moins un composé organosiloxane (A) de formule $R'_nSi(OR)_{4-n}$, dans laquelle $n = 1$ ou 2, R représente un radical alcoyle de 1 à 4 atomes de carbone ou alcoyloxyalcoyle ou acyle et R' représente un radical alcoyle, alcoylène, aryle, aralcoyle, alcoylaryle, alcoylènearyle, en association ou non avec au moins un composé organosiloxane (B) de formule $Si(OR'')_4$, où R'' représente un radical alcoyle ou alcoyloxyalcoyle, réaction d'hydrolyse suivie d'une période de repos de quelques heures élimination sous pression réduite et à froid des solvants légers formés au cours de cetté première hydrolyse et une seconde hydrolyse effectuée, à une température inférieure à 40°C, sur ce premier hydrolysat concentré puis redilué avec un solvant moins volatil du type alcanol en $C_1$ à $C_4$, additionné d'au moins un composé organosiloxane (C) de formule $R'''Si (OR_1)_3$ (où $R'''$ représente un radical époxyalcoyle ou époxyalcoyloxyalcoyle et $R_1$ représente un radical alcoyle en $C^1$ à $C_4$), seconde réaction suivie d'une période de repos de quelques jours puis du réglage du pH du milieu résultant entre 3,5 et 5,5 par addition d'une base organique.

Suivant d'autres caractéristiques:

- Lorsque, dans la première hydrolyse, on utilise un composé organosiloxane (B) tel que défini ci-dessus, celui-ci est utilisé dans une proportion correspondant au rapport de 1 mole du composé (A) pour 0 à 0,3 mole du composé (B);

- le composé (A) est choisi parmi les composés suivants: méthyltriméthoxysilane, méthyltriéthoxysilane, propyltriméthoxysilane, éthyltriméthoxysilane, éthyltriéthoxysilane, propyltriéthoxysilane, phényltriméthoxysilane, phényltriéthoxysilane, vinyltriméthoxysilane, vinyltriéthoxysilane, diméthyldiméthoxysilane, diméthyldiéthoxysilane, méthyltriacétoxysilane, et analogues.

- Le composé (B) est choisi parmi les composés suivants:

tétraméthoxysilane, tétraéthoxysilane, tétra-n-propyloxysilane, tétraméthylglycoloxysilane, tétraéthylglycoloxysilane, et analogues.

- Le composé (C) est avantageusement du γ - glycidyloxypropyltriméthoxysilane, ou un époxysilane analogue.

- Le ou les solvants convenant pour les réactions d'hydrolyse sont choisis parmi les solvants du type alcanol en $C_1$ à $C_4$ pouvant ou non contenir de l'eau.

- L'acide carboxylique peut avantageusement être choisi parmi les acides acétique, propionique, butyrique, acrylique, et analogues.

- La base organique est avantageusement un imidazole, une amidine, une amidine cyclique ou bicyclique comme le N-méthylimidazole, le diazabicycloundécène (DBU) ou le diazabicyclononène (DBN) et analogues.

- La proportion de base organique ajoutée correspondant au pH final désiré se situe entre 0,5 et 5‰ en poids.

Suivant une autre caractéristique, la composition de revêtement liquide selon l'invention présente une stabilité d'au moins 3 mois à 15°C. En outre, elle peut comprendre d'autres adjuvants pour lui conférer ou pour conférer au revêtement en résultant d'autres propriétés particulièrement recherchées, en association avec celles déjà obtenues selon l'invention, ces autres propriétés étant dues à ces adjuvants eux-mêmes.

La présente invention vise également un vernis possédant l'ensemble des propriétés signalées précédemment à partir de la composition de base telle que définie ci-dessus, ce vernis étant obtenu en appliquant une couche de ladite composition liquide sur la surface à protéger puis en faisant durcir cette couche par action de la chaleur.

De façon avantageuse, la composition liquide a une viscosité de 10 à 20 m Pa.s et elle est appliquée de manière à donner, après durcissement, un vernis renfermant de 2 à 50 g de matières solides par mètre carré.

De façon également avantageuse, le revêtement est durci par chauffage à une température comprise entre 50 et 200°C pendant une durée pouvant varier entre une demi-heure et douze heures.

L'invention convient particulièrement bien pour des surfaces de verre minéral, de verres organiques en matières thermoplastiques telles que le polyméthacrylate ou le polycarbonate et analogues, ou en matières thermodurcissables telles que le polycarbonate de diallylglycol et analogues.

D'autres caractéristiques et les avantages de l'invention ressortiront plus clairement de la description qui va suivre et des exemples ci-après donnés à titre purement explicatif et nullement limitatif.

Les tests dont il sera question dans ce qui va suivre sont définis de la façon suivante:

a) Pour la rayabilité/résistance à l'abrasion:

1°/ Par le test d'abrasion avec un billet d'un dollar des Etats-Unis d'Amérique

2°/ Par abrasion avec la laine d'acier type 0000

3°/ Par abrasion avec la gomme crayon-encre ou gomme rouge-bleue.

b) Pour la dureté:

. Par le test aux crayons, par exemple, selon la norme française NF S 77-109§3.3 où plus le numéro H est élevé, plus la dureté du produit testé est grande

c) Pour l'adhésion:

. Par le test au quadrillage selon la norme française NF T 30 038, avec test complémentaire d'adhérence répété cinq fois avec un ruban adhésif (du type Scotch 3M).

d) La résistance à l'eau est évaluée par une nouvelle mesure d'adhérence, de résistance à l'abrasion et de dureté, après que les objets protégés aient été plongés dans l'eau portée à une température aussi haute que possible selon la nature du substrat et pendant un temps suffisant, par exemple une demi-heure dans l'eau bouillante pour les revêtements sur polycarbonate, ou quatre heures à 70°C pour les copolymères de méthacrylate de méthyle.

f) Enfin, on mesure la durée de conservation du liquide d'enduction en déterminant la viscosité, au moyen soit d'une coupe consistométrique AFNOR de 2,5 mm ou de 4 mm en vérifiant le temps d'écoulement, soit en centipoises avec un viscosimètre Drage à mobile tournant, ou autre appareil adéquat pour mesurer une viscosité de l'ordre de quelques dizaines de centipoises.

**Exemple 1**

On mélange dans un réacteur 487,4 g de méthyltriméthoxysilane, 142 g de tétraéthoxysilane et 400 g de n-butanol. On introduit ensuite 50 g d'acide acétique glacial, 248 g d'eau. On laisse l'hydrolyse s'effectuer pendant une heure en refroidissant la solution obtenue pour que la température ne dépasse pas 50°C. Après une heure, on élimine sous vide et à froid les solvants légers tels que méthanol et éthanol, formés lors de l'hydrolyse, pour obtenir une composition ayant un extrait sec théorique de 26 % (mesuré en équivalent $SiO_2$ et $CH_3SiO_{3/2}$).

On introduit alors dans la solution: 80 g de glycidyloxypropyltriméthoxysilane, 20 g d'eau. On effectue cette deuxième hydrolyse en maintenant la température strictement inférieure à 40°C. Le pH est alors de 3,5 à 4.

Après un délai de 3 à 4 jours, on introduit dans la solution entre 0,8 ‰ et 1,3 ‰ de DBU (diazabicycloundécène) pour amener le pH entre 4,6 et 4,9 pour obtenir un vernis prêt à l'emploi.

Ce vernis présente une bonne stabilité à la conservation; la coupe consistométrique AFNOR de 2,5 mm passe de 38 à 50 secondes après trois mois à la température ambiante.

Une lentille en polycarbonate thermoplastique est plongée dans la composition puis elle en est lentement retirée pour laisser en surface une pellicule régulière. Ce revêtement est séché à l'air et ensuite durci pendant 1 heure à 120°C.

Même après traitement d'une demi-heure dans l'eau bouillante les objets revêtus de ce vernis durci résistent au test du quadrillage, à la rayure et à l'eau; ainsi avant et après le test à l'eau bouillante, les surfaces vernies de cette manière résistent à la laine d'acier 0000 et au crayon 8H.

**Exemple 2**

On opère comme dans l'exemple 1, en remplaçant le glycidyloxypropyltriméthoxysilane par le vinyltriéthoxysilane (65 g). Le vernis appliqué à une surface de polycarbonate ne résiste pas au test du quadrillage quelles que soient la température et la durée de la cuisson.

**Exemple 3**

Vernis plus concentré
On mélange 487,4 g de méthyltriméthoxysilane, 142 g de tétraéthoxysilane, 242 g d'eau, 150 g d'acide acétique glacial et 300 g de n-butanol.

On effectue l'hydrolyse en maintenant la température inférieure à 50°C puis, après 1 heure, on élimine les solvants légers à froid sous vide.

On concentre jusqu'à un extrait sec de 31,8 % soit 1768 g de solution puis on ajoute 160 g de glycidyloxypropyltriméthoxysilane, 40 g de $H_2O$.

Lors de cette deuxième hydrolyse, la température reste inférieure à 40°C.

Après un délai de 3 jours, on ajuste le pH à 4,7 par addition de D.B.U. Le vernis est appliqué par trempage sur une surface de polycarbonate et est durci deux heures à 120°C. Après immersion d'une demi-heure dans l'eau bouillante, ce vernis durci résiste au test du quadrillage.

**Exemple 4**

Vernis sans tétraéthoxysilane
On mélange 713,2 g de méthyltriéthoxysilane, 216,25 g d'eau, 50 g d'acide acétique glacial, 200 g de n-butanol.

On effectue l'hydrolyse comme précédemment. Après 1 heure, on élimine l'éthanol à froid sous vide.

On concentre jusqu'à un extrait sec de 28,2 % soit 953 g de solution puis on ajoute 60 g de glycidyloxypropyltriméthoxysilane, 13,8 g d'eau.

Lors de cette deuxième hydrolyse, la température reste inférieure à 40°C.

Le vernis appliqué par trempage à une surface de polycarbonate et durci une heure à 120°C, résiste au test du quadrillage même après une immersion d'une demi-heure dans l'eau bouillante. La dureté et la résistance à l'abrasion du vernis n'égalent cependant pas celles du vernis de l'exemple 1.

**Exemple 5**

Autres acides que l'acide acétique
On mélange 256,35 g de méthyltriméthoxysilane, 77,3 g de tétraéthoxysilane, 100 g de n-butanol, 128,5 g d'eau, 30 g d'acide acrylique.

On effectue l'hydrolyse et l'élimination des solvants légers comme dans les exemples précédents.

On concentre jusqu'à un extrait sec théorique de 28 %, puis on ajoute: 40 g de glycidyloxypropyltriméthoxysilane, 10 g d'eau.

Au bout de 4 jours, on ajuste le pH à 4,8 par addition de D.B.U. L'adhérence de ce vernis est moins bonne que lorsqu'on utilise de l'acide acétique. Le vernis appliqué par trempage à une surface de polycarbonate, durci deux heures à 120°C, ne résiste pas au test du quadrillage quand la surface vernie a été immergée une demi-heure dans l'eau bouillante.

**Exemple 6**

On opère comme précédemment, en remplaçant l'acide acrylique par 30,8 g d'acide propionique.

L'adhérence de ce vernis comme celle du vernis décrit à l'exemple 5 est inférieure à celle du vernis obtenu en utilisant l'acide acétique selon le test décrit à l'exemple 1. Il ne résiste pas au test du quadrillage après 2 heures de cuisson à 120°C et passage à l'eau bouillante.

## Exemple 7

On opère comme dans l'exemple 1, en remplaçant l'acide acétique glacial par l'acide chlorhydrique (0,1 g). Le vernis ne résiste pas au test du quadrillage après traitement de 30 minutes dans l'eau bouillante même après une cuisson de 4 heures à 120°C.

## Exemple 8

On opère comme dans l'exemple 1, en éliminant les solvants légers par chauffage à 60°C à pression atmosphérique pour obtenir une composition ayant un extrait sec théorique de 26 %.

Ce vernis appliqué par trempage sur une surface de polycarbonate, durci une heure à 120°C, puis immergé dans l'eau bouillante pendant une demi-heure, ne résiste pas au test du quadrillage. Pousser la durée du durcissement à 4 heures à 120°C ou relever la température à 125°C n'améliore pas les résultats du test au quadrillage après le traitement à l'eau bouillante pendant une demi-heure. Par ailleurs, la durée de vie en pot (pot life) de ce vernis est inférieure à celle du vernis préparé selon l'exemple 1.

## Exemple 9

On opère comme dans l'exemple 1, en ajoutant le glycidyloxypropyltriméthoxysilane et l'eau de la deuxième hydrolyse avant l'évaporation des solvants légers.

Ce vernis est appliqué par trempage à une surface de polycarbonate. Il est durci quatre heures à 120°C. Après immersion d'une demi-heure de ce vernis durci dans l'eau bouillante, ce vernis ne résiste pas au test du quadrillage.

## Exemple 10

On mélange dans un réacteur 425,6 g de méthyltriméthoxysilane, 142 g de tétraéthoxysilane, 400 g de n-butanol.

On introduit ensuite 50 g d'acide acétique glacial, 218 g d'eau. On effectue l'hydrolyse en refroidissant la solution pour maintenir une température inférieure à 50°C pendant une heure.

Après une heure, on évapore sous vide et à froid le méthanol et l'éthanol, formés lors de l'hydrolyse, pour obtenir une composition ayant un extrait sec théorique de 26 % (mesuré en équivalent $SiO_2$ et $CH_3SiO_{3/2}$).

On introduit alors dans la solution 172,8 g de vinyltriéthoxysilane, 80 g de glycidyloxypropyltriméthoxysilane, 69 g d'eau.

On effectue cette deuxième hydrolyse en maintenant la température strictement inférieure à 40°C.

Après 4 jours, on ajuste le pH à environ 4,8 par addition de D.B.U. On obtient un vernis prêt à l'emploi.

Une surface de polycarbonate revêtue par trempage dans ce vernis durci ensuite par cuisson de 1 heure à 120°C résiste au test du quadrillage avant et après immersion d'une demiheure dans l'eau bouillante.

## Exemple 11

Essais avec d'autres bases que le DBU
On mélange 487,4 g de méthyltriméthoxysilane, 142 g de tétraéthoxysilane, 240 g d'eau, 50 g d'acide acétique glacial, 400 g de n-butanol.

On effectue l'hydrolyse en maintenant la température inférieure à 50°C. Après une heure, on élimine les solvants légers à froid sous vide.

On concentre jusqu'à un extrait sec théorique de 27 % puis on ajoute 80 g de glycidyloxypropyltriméthoxysilane, 20 g d'eau.

Cette deuxième hydrolyse se fait à une température inférieure à 40°C.

Au bout de 3 jours, on ajuste le pH à environ 4,8 par addition de diazabicyclononène (D.B.N.).

Une surface de polycarbonate revêtue par trempage dans ce vernis durci ensuite trois heures à 120°C, résiste au test du quadrillage avant et après immersion dans l'eau bouillante pendant une demi-heure.

## Exemple 12

On opère comme dans l'exemple précédent, en remplaçant le D.B.N. par le N-méthylimidazole pour ajuster le pH à 4,8.

Une surface de polycarbonate revêtue par trempage dans ce vernis durci ensuite trois heures à 130°C résiste au test du quadrillage avant et après immersion dans l'eau bouillante pendant une demi-heure.

## Revendications

1. Composition liquide de base stable convenant pour la réalisation de revêtements ou vernis transparents obtenue à partir de composés organosiloxanes, hydrolysés dans un mélange d'eau, d'alcools et d'un acide organique, appartenant aux familles des composés (A) de

formule R'$_n$Si(OR)$_{4-n}$ dans laquelle n = 1 ou 2, R représente un radical alcoyle de 1 à 4 atomes de carbone, alcoyoxyalcoyle ou acyle et R' représente un radical alcoyle, alcoylène, aryle, aralcoyle, alcoylaryle, alcoylènearyle, éventuellement des composés (B) de formule Si(OR")$_4$ où R" représente un radical alcoyle ou alcoyloxyalcoyle et des composés (C) de formule R"Si(OR$_1$)$_3$ où R'" représente un radical époxyalcoyle ou époxyalcoyloxyalcoyle, et R$_1$ représente un radical alcoyle en C$_1$ à C$_4$, composition caractérisée par le fait qu'ellecomprend, en solution dans au moins un solvant organique pouvant ou non contenir de l'eau, de 10 à 40 % en poids d'un composés organosilicique durcissable correspondant à celui résultant d'une première réaction d'hydrolyse effectuée à une température inférieure à 50°C en présence d'un acide carboxylique et d'eau sur au moins un composé organosiloxane du type (A), en association ou non avec au moins un composé organosiloxane du type (B), réaction d'hydrolyse suivie d'une période de repos de quelques heures, élimination sous pression réduite et à froid des solvants légers formés au cours de cette première hydrolyse et une seconde hydrolyse effectuée à une température inférieure à 40°C sur ce premier hydrolysat concentré puis redilué avec un solvant moins volatil du type alcanol en C$_1$ à C$_4$, additionné d'au moins un composéorganosiloxane du type (C), seconde réaction suivie d'une période de repos de quelques jours puis du réglage du pH du milieu résultant entre 3,5 et 5,5 par addition d'une base organique.

2. Composition selon la revendication 1, caractérisée par le fait que la proportion de l'organosiloxane (B) correspond à un rapport de 1 mole du composé (A) pour 0 à 0,3 mole de (B).

3. Composition selon la revendication 1 ou 2, caractérisée par le fait que le composé (A) est la méthyltriméthoxysilane, méthyltriéthoxysilane, propyltriméthoxysilane, éthyltriméthoxysilane, phényltriméthoxysilane, phényltriéthoxysilane, vinyltriméthoxysilane, vinyltriéthoxysilane, diméthyldiméthoxysilane, diméthyldiéthoxysilane, méthyltriacétoxysilane, oule propyltriéthoxysilane.

4. Composition selon l'une des revendications 1 à 3, caractérisée par le fait e le composé (B) est le tétraméthoxysilane, tétraéthoxysilane, tétra-n-propyloxysilane, tétraméthylglycoloxysilane, ou le tétraéthylglycoloxysilanes et que le composé (C) est avantageusement du γ-glycidyloxypropyltriméthoxysilane.

5. Composition selon l'une quelconque des revendications 1 à 4, caractérisée par le fait que le ou les solvants convenant pour les réaction d'hydrolyse sont choisis parmi les solvants du type alcanol en C$_1$-C$_4$ pouvant ou non contenir de l'eau.

6. Composition selon l'une quelconque des revendications 1 à 5, caractérisée par le fait que l'acide carboxylique est l'acide acétique, propionique, butyrique ou acrylique.

7. Composition selon l'une quelconque des revendications 1 à 6, caractérisée par le fait que la base organique est un imidazole, une amidine, une amidine cyclique ou bicyclique comme le N-méthylimidazole, le diazabicycloundécène (DBU) ou le diazabycyclononène (DBN).

8. Composition selon l'une quelconque des revendications 1 à 7, caractérisée par le fait que la proportion de base organique ajoutée correspondant au pH final désiré se situe entre 0,5 et 5 ‰ en poids.

9. Application d'une composition de base selon l'une quelconque des revendications 1 à 8 pour l'obtention d'un vernis caractérisée par le fait qu'on prépare une telle composition de base présentant une viscosité entre 10 et 20 mPa.s, qu'on applique cette composition sur un support par immersion, enduction, pulvérisation, application centrifuge, coulée et analogues, de manière à obtenir une couche de revêtement renfermant de 2 à 50 g de matière solide par m$^2$ de surface revêtue et qu'on soumet ledit dépôt de la composition à un traitement thermique pour en assurer le durcissement.

10. Application selon la revendication 9, caractérisée par le fait que le revêtement est durci par chauffage à une température comprise entre 50 et 200°C, pendant une durée pouvant varier entre une demi-heure et 12 heures.

11. Vernis ayant une bonne adhérence au support, une bonne résistance au rayage et/ou à l'abrasion, une bonne dureté, une bonne résistance à l'opacification dans le temps, une bonne résistance au craquèlement et une bonne résistance à l'eau et aux atmosphères humides, caractérisé par le fait qu'il est obtenu par application d'une composition de base selon l'une quelconque des revendications 1 à 9, dans des conditions telles que définies à la revendication 9 ou 10.

12. Application selon l'une des revendications 9 ou 10 pour revêtir des surfaces en verre minéral, en verres organiques en matière thermoplastique comme le polyméthacrylate ou le polycarbonate, ou en matières thermodurcissables comme le polycarbonate de diallylglycol et autres matériaux analogues.

**Patentansprüche**

1. Flüssige Zusammensetzung auf stabiler Basis, die sich zur Aufbringung von transparenten Überzügen oder Lackierungen eignet, erhalten aus Organosiloxanverbindungen, die in einem Gemisch von Wasser, Alkoholen und einer organischen Säure hydrolysiert sind und der Gattung angehören von
Verbindungen (A) der Formel R'$_n$Si(OR)$_{4-n}$ worin
n = 1 oder 2,
R einen Alkylrest mit 1 bis 4 Kohlenstoffatomen oder einen Alkyloxyalkylrest oder Acylrest, und
R' einen Alkyl- Alkylen-, Aryl-, Aralkyl-, Alkylaryl oder Alkylenarylrest bedeuten,
gegebenenfalls Verbindungen (B) der Formel

Si(OR'')$_4$, worin R''' einen Alkyl- oder Alkyloxyalkylrest bedeutet, und Verbindungen (C) der Formel R''Si(OR$_1$)$_3$, worin R'' einen Epoxyalkyl- oder Epoxyalkyloxyalkylrest und R$_1$ einen C$_1$- bis C$_4$-Alkylrest bedeuten, dadurch gekennzeichnet, daß die Zusammensetzungen in Lösung in mindestens einem organischen Lösungsmittel, das gegebenenfalls Wasser enthalten kann, 10 bis 40 Gew.-% einer härtbaren Siliciumorganischen Verbindung enthält, die derjenigen entspricht, wie sie erhalten wird durch

- eine erste, bei einer Temperatur von unter 50°C in Gegenwart einer Carbonsäure und von Wasser durchgeführte Hydrolyse mindestens einer Organosiloxanverbindung der Art (A), gegebenenfalls in Gegenwart mindestens einer Organosolixanverbindung der Art (B),

- anschließendes Stehenlassen des Hydrolysats für einige Stunden,

- Entfernung von im Verlaufe dieser ersten Hydrolysereaktion gebildeten leichtflüchtigen Lösungsmitteln unter vermindertem Druck und in der Kälte,

- eine zweite, bei einer Temperatur von unter 40°C durchgeführte Hydrolyse des erhaltenen konzentrierten Hydrolysats, das wieder verdünnt ist mit einem weniger flüchtigen Lösungsmittel des Typs Alkanol mit 1 bis 4 Kohlenstoffatomen und das versetzt ist mit mindestens einer Organosiloxanverbindung der Art (C),

- anschließendes Stehenlassen des zweiten Hydrolysats für einige Tage, und danach

- Einstellen des pH-Werts des erhaltenen Milieus auf 3,5 bis 5,5 durch Zugabe einer organischen Base.

2. Zusammensetzung nach Anspruch 1, dadurch gekennzeichnet, daß die Menge an Organosiloxan (B) einem Verhältnis von 1 Mol der Verbindung (A) pro 0 bis 0,3 Mol von (B) entspricht.

3. Zusammensetzung nach Ansprüchen 1 oder 2, dadurch gekennzeichnet, daß die Verbindung (A) aus Methyltrimethoxysilan, Methyltriethoxysilan, Propyltrimethoxysilan, Ethyltrimethoxysilan, Phenyltrimethoxysilan, Phenyltriethoxysilan, Vinyltrimethoxysilan, Vinyltriethoxysilan, Dimethyldimethoxysilan, Dimethyldiethoxysilan, Methyltriacetoxysilan oder Propyltriethoxysilan besteht.

4. Zusammensetzung nach einem der Ansprüche 1 bis 3, dadurch gekennzeichnet, daß die Verbindung (B) aus Tetramethoxysilan, Tetraethoxysilan, Tetra-n-propyloxysilan, Tetramethylglycoloxysilan oder Tetraethylglycoloxysilan und die Verbindung (C) in vorteilhafter Weise aus γ-Glycidyloxypropyltrimethoxysilan bestehen.

5. Zusammensetzung nach einem der Ansprüche 1 bis 4, dadurch gekennzeichnet, daß das oder die für die Hydrolysereaktionen eingesetzten Lösungsmittel aus Lösungsmitteln vom Typ Alkanol mit 1 bis 4 Kohlenstoffatomen, die gegebenenfalls Wasser enthalten, bestehen.

6. Zusammensetzung nach einem der Ansprüche 1 bis 5, dadurch gekennzeichnet, daß die eingesetzte Carbonsäure aus Essigsäure, Propionsäure, Buttersäure oder Acrylsäure besteht.

7. Zusammensetzung nach einem der Ansprüche 1 bis 6, dadurch gekennzeichnet, daß die eingesetzte organische Base aus einem Imidazol, einem Amidin, einem zyklischen oder bizyklischen Amidin vom Typ N-Methylimidazol, Diazabicycloundecen (DBU) oder Diazabicyclononen (DBN) besteht.

8. Zusammensetzung nach einem der Ansprüche 1 bis 7, dadurch gekennzeichnet, daß die Menge an organischer Base, die entsprechend dem gewünschten End-pH-Wert zugesetzt wird, zwischen 0,5 und 5 %, bezogen auf das Gewicht, liegt.

9. Anwendung einer Zusammensetzung nach einem der Ansprüche 1 bis 8 zur Erzeugung eines Überzugs, dadurch gekennzeichnet, daß man eine derartige Zusammensetzung mit einer Viskosität zwischen 10 und 20 mPa.s herstellt, die erhaltene Zusammensetzung durch Eintauchen, Aufstreichen, Aufsprühen, Aufschleudern, Aufgiessen oder analoge Methoden auf ein Trägermaterial in solcher Weise aufbringt, daß pro m$^2$ überzogene Oberfläche eine Uberzugsschicht mit 2 bis 50 g Feststoff anfällt, und diese Ablagerung an Überzugsmittel einer thermischen Behandlung zur Sicherstellung der Härtung unterwirft.

10. Anwendung nach Anspruch 9, dadurch gekennzeichnet, daß der Überzug durch Erhitzen auf eine Temperatur zwischen 50 und 200°C während einer zwischen 1/2 und 12 h liegenden Zeitspanne gehärtet wird.

11. Überzug mit guter Haftung auf dem Trägermaterial, guter Widerstandsfähigkeit gegen Zerkratzen und/oder Abrieb, guter Härte, guter Beständigkeit gegen im Laufe der Zeit erfolgendes Erblinden, guter Widerstandsfähigkeit gegen Rißbildung und Abblättern und guter Widerstandsfähigkeit gegenüber Wasser und feuchter Atmosphäre, dadurch gekennzeichnet, daß er durch Aufbringung einer Zusammensetzung nach einem der Ansprüche 1 bis 8 unter den Bedingungen gemäß Ansprüchen 9 oder 10 erhalten wurde.

12. Anwendung nach einem der Ansprüche 9 oder 10 zum Überziehen von Oberflächen aus mineralischem Glas, organischen Gläsern aus thermoplastischem Material vom Typ Polymethacrylat oder Polycarbonat oder aus hitzehärtbaren Materialien vom Typ Diallylglycolpolycarbonat oder anderen analogen Materialien.

**Claims**

1. A stable liquid basic composition suitable for forming transparent coatings or varnishes obtained from organo-siloxane compounds hydrolyzed in a mixture of water, alcohols and an organic acid belonging to the families of compounds (A) of formula $R'_n Si (OR)_{4-n}$ in which n = 1 or 2, R represents an alkyl radical of 1 to 4 carbon atoms, alkyloxyalkyl or acyl, and R' represents an alkyl, akylene, aryl, aralkyl, alkylaryl, akylenearyl radical, possibly compounds (B) of formula $Si(OR'')_4$, where R'' represents an alkyl or alkyloxyalkyl radical and compounds (C) of formula $R'' Si(OR_1)_3$, where R'' represents an epoxyalkyl or epoxyalkyloxyalkyl radical and $R_1$ represents an alkyl $C_1$-$C_4$ radical, such composition being characterized in that it comprises in solution in at least one organic solvent that may or may not contain water from 10 to 40 % by weight of an organo-silicic hardenable compound corresponding to that resulting from a first hydrolysis reaction, effected at a temperature lower than 50°C in the presence of a carboxylic acid and water on at least one organo-siloxane compound of the type (A) with or without at least one organo-siloxane compound of the type (B), said hydrolysis reaction being followed by a standing period of a few hours, removal under reduced pressure and cold conditions of the light solvents formed during such first hydrolysis and a second hydrolysis effected at a temperature lower than 40°C on the first hydrolysate concentrated then rediluted with a less volatile solvent of the $C_1$-$C_4$-alkanol type to which at least one organo-siloxane compound of the type (C) is added, such second reaction being followed by a standing period of a few days, then the setting of pH of the resulting medium between 3.5 and 5.5 by addition of an organic base.

2. A composition according to claim 1 characterized in that the proportion of organo-siloxane (B) corresponds to a ratio of one mole of compound (A) to 0 to 0.3 mole of (B).

3. A composition according to claim 1 or 2, characterized in that the compound (A) is methyltrimethoxysilane, methyltriethoxysilane, propyltrimethoxysilane, ethyltrimethoxysilane, phenyltrimethoxysilane, phenyltriethoxysilane, vinyltrimethoxysilane, vinyltriethoxysilane, dimethyldimethoxysilane, dimethyldiethoxysilane, methyltriacetoxysilane, or propyltriethoxysilane.

4. A composition according to one of claims 1 to 3, characterized in that the compound (B) is tetramethoxysilane, tetraethoxysilane, tetra-n-propyloxysilane, tetramethylglycoloxysilane or tetraethylglycoloxysilanes, and in that the compound (C) is advantageously gamma-glycidyloxypropyltrimethoxysilane.

5. A composition according to any one of claims 1 to 4, characterized in that the solvent(s) suitable for the hydrolysis reactions are selected among solvents of $C_1$-$C_4$-alkanol type that may or may not contain water.

6. A composition according to any one of claims 1 to 5, characterized in that the carboxylic acid is acetic, propionic, butyric, or acrylic acid.

7. A composition according to any one of claims 1 to 6, characterized in that the organic base is an imidazole, amidine, cyclic or bicyclic amidine such as N-methylimidazole, diazabicycloundecene (DBU) or diazabicyclononene (DBN).

8. A composition according to any one of claims 1 to 7, characterized in that the proportion of added organic base corresponding to the desired final pH lies between 0.5 and 5%o by weight.

9. An application of a basic composition according to any one of claims 1 to 8, for obtaining a varnish, characterized by preparing such a basic composition presenting a viscosity of between 10 and 20 mPa.s, applying such composition to a carrier by dipping, coating, spraying, centrifugal application, pouring and the like, so as to obtain a coating layer containing from 2 to 50 g of solid material per square meter of coated area, and submitting said deposition of the composition to a thermal treatment to cause hardening thereof.

10. An application according to claim 9, characterized in that the coating is hardened by heating to a temperature comprised between 50 and 200°C for a time period that may vary between half an hour and 12 hours.

11. A varnish with good adherence to the carrier, good scratching and/or abrasion strength, good hardness, good opacifying strength longevity, good cracking strength and good strength to water or moist atmospheres, characterized in that it is obtained by the application of a basic composition according to any one of claims 1 to 9, under such conditions as defined in claim 9 or 10.

12. An application according to one of claims 9 or 10, for coating surfaces of mineral glass, organic glasses, thermoplastic material such as polymethacrylate or polycarbonate, or thermosettable materials such as diallylglycolpolycarbonate, and other similar materials.